# EUROPEAN PATENT APPLICATION

(11) **EP 4 513 918 A1**
(43) Date of publication of application: **26.02.2025**
(21) Application number: 22938504.2
(22) Date of filing: 20.04.2022
(51) Int. Cl.: H04W 8/24, H04W 76/15

(54) **TERMINAL, BASE STATION, AND COMMUNICATION METHOD**

(71) Applicant: NTT DOCOMO, INC., Tokyo 100-6150 (JP)
(72) Inventor: NAKAMURA, Takuma, Tokyo 100-6150 (JP); OHARA, Tomoya, Tokyo 100-6150 (JP); HARADA, Hiroki, Tokyo 100-6150 (JP)
(74) Representative: Hoffmann Eitle
(86) International application number: PCT/JP2022/018342
(87) International publication number: WO 2023/203704

(57) **Abstract**

A terminal includes: a transmission unit configured to report, to a base station, a maximum number of bands to be supported for a transmission switching scheme in which transmission switching can be performed across three or more bands; and a reception unit configured to receive, from the base station, configuration information related to a band for use in the transmission switching scheme.

## Description

### Technical Field

The present invention relates to a terminal, a base station, and a communication method in a radio communication system.

### Background Art

In New Radio (NR) (also referred to as "5G") which is a successor system of long term evolution (LTE), techniques for satisfying requirements such as a large-capacity system, a high-speed data transmission rate, low delay, simultaneous connection of a large number of terminals, low cost, and power saving have been studied (refer to Non-Patent Document 1, for example).

Furthermore, 6G has been studied as a next-generation radio communication system of 5G, and realization of radio qualities exceeding 5G is expected. For example, in 6G, studies are being conducted to realize further increases in capacities, use of new frequencies, further reductions in delays, further increases in reliability, further reductions in power consumption, and expansion of coverage in new regions (high-altitudes, sea, and outer space) by non-terrestrial networks.

### Related Art Document

### Non-Patent Document

Non-Patent Document 1: 3GPP TS 38.300 V16. 8.0 (2021 -12)

### SUMMARY OF THE INVENTION

### Problems to be Solved by the Invention

In 3GPP, studies are being conducted to enhance uplink transmission in multi-carrier. For example, an operation is being studied in which a terminal that supports up to two simultaneous transmissions dynamically switches bands for uplink transmission across three or four bands. However, there is no existing technology related to capability information and configuration information for realizing the operation. Therefore, there is a possibility that bands of uplink transmission cannot be appropriately switched.

The present invention has been made in view of the above, and it is therefore an object of the present invention to provide a technique that enables appropriate switching of a band used for uplink transmission in a radio communication system.

### Means for Solving the Problems

According to the disclosed technique, there is provided a terminal including:
a transmission unit configured to report, to a base station, a maximum number of bands to be supported for a transmission switching scheme in which transmission switching can be performed across three or more bands; and
a reception unit configured to receive, from the base station, configuration information related to a band for use in the transmission switching scheme.

### Effects of the Invention

According to the disclosed technology, a technique that enables appropriate switching of a band used for uplink transmission is provided in a radio communication system.

### Brief Description of the Drawings

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a diagram showing Rel-16 UL Tx switching;
[Fig. 4] FIG. 4 is a diagram showing Rel-17 UL Tx switching;
[Fig. 5] FIG. 5 is a diagram showing Rel-18 UL Tx switching;
[Fig. 6] FIG. 6 is a diagram showing an example of UE capability;
[Fig. 7] FIG. 7 is a diagram showing an example of a basic operation of an embodiment;
[Fig. 8] FIG. 8 is a diagram showing a configuration example of a base station 10;
[Fig. 9] FIG. 9 is a diagram showing a configuration example of the terminal 20;
[Fig. 10] FIG. 10 is a diagram showing an example of a hardware configuration of the base station 10 or the terminal 20 according to the embodiment of the present invention; and
[Fig. 11] FIG. 11 is a diagram showing a configuration example of a vehicle.;

### Detailed Description of the Invention

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, existing techniques are used as appropriate. The existing technology is, for example, existing LTE or existing NR, but is not limited to existing LTE and NR.

In addition, in the embodiments of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in the existing LTE or NR are used. This is for convenience of description, and signals, functions, and the like similar to these may be referred to by other names. The above-mentioned terms in NR correspond to NR-SS, NR-PSS, NR-SSS, NR-PBCH, NR-PRACH and the like. However, even a signal used for NR is not necessarily specified as "NR -".

In the embodiments of the present invention, the duplex scheme may be a time division duplex (TDD) scheme, a frequency division duplex (FDD) scheme, or another scheme (for example, flexible duplex).

In the embodiments of the present invention, a radio parameter or the like being "configured" may mean that a predetermined value is pre-configured or that a radio parameter notified from the base station 10 or the terminal 20 is configured.

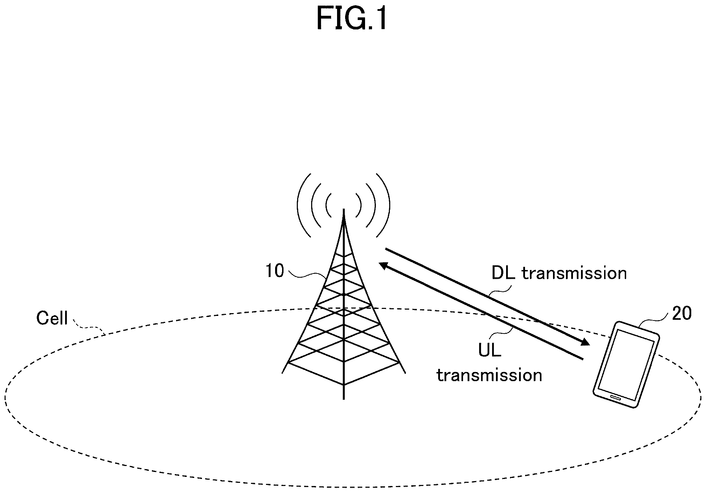

FIG. 1 is a diagram showing a configuration example (1) of a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication apparatus that provides one or more cells and performs radio communication with the terminal 20. The physical resource of the radio signal is defined in a time domain and a frequency domain, and the time domain is defined by orthogonal frequency division multiplexing (OFDM). The frequency domain may be defined by the number of symbols, or the frequency domain may be defined by the number of subcarriers or the number of resource blocks. The base station 10 transmits a synchronization signal and system information to the terminal 20. The synchronization signal is, for example, NR-PSS and NR-SSS. The system information is transmitted by, for example, NR-PBCH and is also referred to as broadcast information. The synchronization signal and the system information may be referred to as an SSB (SS/PBCH block). As illustrated in FIG. 1, the base station 10 transmits a control signal or data to the terminal 20 in downlink (DL), and receives a control signal or data from the terminal 20 in uplink (UL). Both the base station 10 and the terminal 20 can transmit and receive signals by performing beamforming. In addition, both the base station 10 and the terminal 20 can apply communication by multiple input multiple output (MIMO) to DL or UL. Both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (PSCell: Primary SCG Cell) of another base station 10 by dual connectivity (DC).

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives a control signal or data from the base station 10 in DL and transmits a control signal or data to the base station 10 in UL, thereby using various communication services provided by the radio communication system. The terminal 20 receives various reference signals transmitted from the base station 10 and measures the channel quality based on the reception result of the reference signal.

The terminal 20 can perform carrier aggregation in which a plurality of cells (a plurality of component carriers (CCs)) are aggregated to perform communication with the base station 10. In carrier aggregation, one PCell (Primary cell) and one or more SCells (Secondary cell) are used. Also, a PUCCH-SCell with a PUCCH may be used.

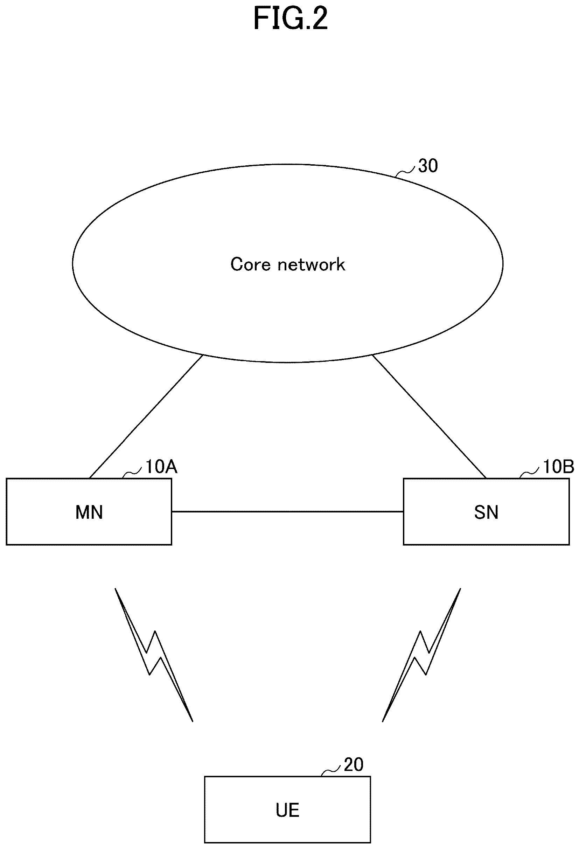

FIG. 2 is a diagram for explaining an example (2) of the radio communication system according to the embodiment of the present invention. FIG. 2 illustrates a configuration example of a radio communication system in a case where dual connectivity (DC) is executed. As shown in FIG. 2, the base stations 10A and 10B are provided as a master node (MN) and a secondary node (SN), respectively. The base stations 10A and 10B are connected to a core network. The terminal 20 can communicate with both the base stations 10A and 10B.

A cell group provided by the base station 10A serving as the MN is referred to as a master cell group (MCG), and a cell group provided by the base station 10B serving as the SN is referred to as a secondary cell group (SCG). In DC, the MCG is formed with one PCell and one or more SCells, and the SCG is formed with one PSCell (Primary SCG Cell) and one or more SCells.

The processing operation in the present embodiment may be executed by the system configuration shown in FIG. 1, the system configuration shown in FIG. 2, or other system configurations.

In 3GPP, studies are being conducted to enhance operation in multi-carrier. To be more specific, in Rel-18, an operation is under study whereby a terminal that supports up to two transmissions at the same time in FR1 (Frequency Range 1) switches bands for UL transmitted dynamically across three or four bands. Hereinafter, conventional UL Tx switching will be described first, and then problems in Rel-18 will be described.

### (About UL Tx switching)

In the related art (Rel-16 and Rel-17), the terminal 20 supports an UL Tx switching function (Uplink transmission switching function) that is a function enabling UL transmission switching between two bands (two carriers). Even the terminal 20 having only two transmission chains (Tx Chains) can perform operations such as transmission using two antenna ports in one carrier and transmission using one antenna port in one carrier and another antenna port in another carrier by switching the operations according to time by using the UL Tx switching function.

The transmission chain (Tx Chain) is a physical function for transmission in the terminal 20 regardless of whether or not actual transmission is performed. Transmission can be performed on one carrier by one transmission chain. By switching the carrier (a transmission function unit corresponding to the carrier) used by the transmission chain, the carrier that can be transmitted by the transmission chain can be switched.

The antenna port is an antenna that can actually perform transmission using a transmission chain (Tx Chain). The transmit chain and the antenna port may be used interchangeably. The "antenna port" may be referred to as a "port".

### (UL Tx switching of Rel-16)

In Rel-16, UL Tx switching in SUL and CA is supported. In Rel-16, the terminal 20 supports two carriers and has two transmission chains. One transmission chain is fixed to one carrier, while the other transmission chain can be associated with either of the two carriers by a switch.

Therefore, for example, simultaneous transmission by two antenna ports can be performed by one carrier. Each antenna port can also perform transmission with one carrier and one antenna port. These schemes can be dynamically switched.

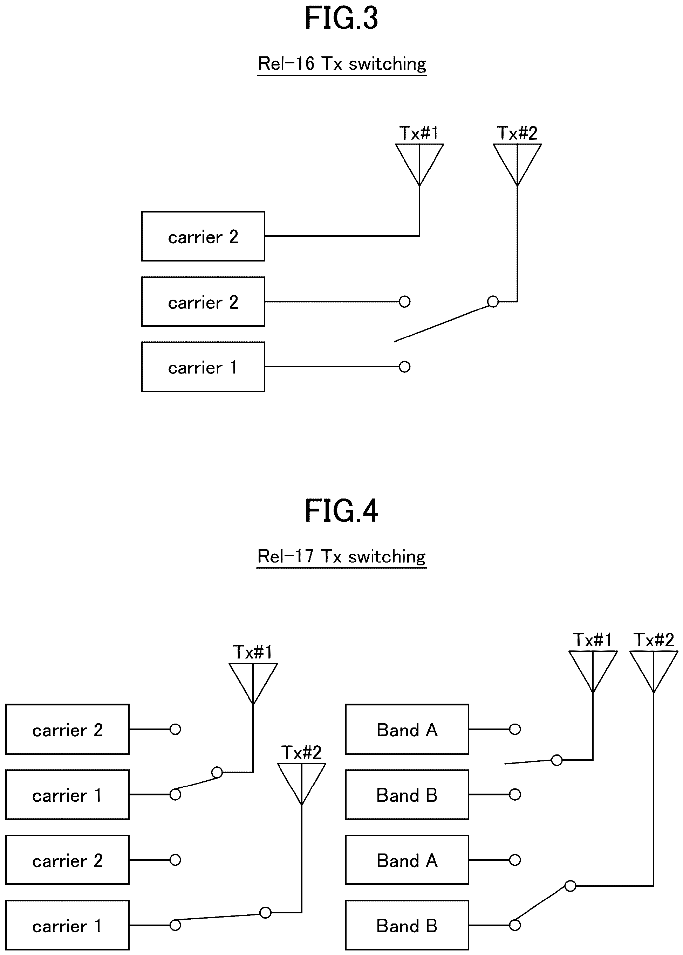

FIG. 3 illustrates Rel-16 UL Tx switching, where antenna port #1 is fixed to carrier 2, but antenna port #2 is switchable between carrier 1 and carrier 2, as shown in the figure.

### (UL Tx switching of Rel-17)

Next, Rel-17 will be described. In Re1-17, since each of the two transmission chains can support two carriers, for example, as shown on the left side of FIG. 4, two port transmission is possible even in the carrier 1. The right side of FIG. 4 is a diagram showing the connection destination of the antenna port by a band.

In addition, in Rel-17, switching between three carriers is also possible in addition to switching between two carriers. However, two carriers of the three carriers are carriers in the same band.

### (Rel-18 UL Tx switching)

In 3GPP, "UL Tx switching schemes across up to 3 or 4 bands with restriction of up to 2 tx simultaneous transmission for FR1 UEs" (a feature whereby a terminal that supports up to two transmissions at the same time in FR1 dynamically switches bands for UL transmission across 3 or 4 bands) is under study. For convenience, this function may be referred to as "Rel-18 UL Tx switching".

The above-described function is a function of configuring three or four UL bands (carriers) for a terminal that cannot perform UL CA (Carrier Aggregation) or can perform UL CA only up to two UL CA, and enabling the base station 10 to dynamically instruct the terminal to perform transmission in one or two UL bands (carriers) of the three or four UL bands.

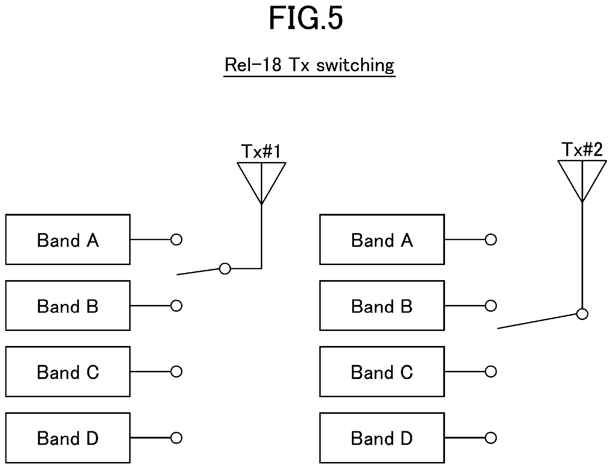

FIG. 5 shows an example of Rel-18 UL Tx switching. Here, as an example, four bands A to D are used as bands that can be used for UL Tx switching. As illustrated in FIG. 5, there are two antenna ports (two Tx Chains), and each of the antenna ports can be switched to any one of the bands A to D.

With such a function, it is possible to instruct the terminal 20 to perform UL transmission using an UL band (carrier) suitable for use in each time resource in consideration of a traffic situation or a TDD configuration between a plurality of UL bands (carriers). This improves the frequency utilization efficiency and UL throughput.

In Rel-16 and Rel-17, UL Tx switching between two bands is specified. However, in Rel-18 UL Tx switching, it is not clear how to configure an UL band (carrier) that is a switching candidate in the terminal 20.

Conventionally, a plurality of DL/UL carriers are configured as serving cells in the terminal 20 supporting UL CA, the number of DL/UL carriers being equal to or less than the number of CCs of UL CA supported by the terminal 20, and among the DL/UL carriers, an UL CC to be used for transmission can be dynamically indicated. On the other hand, in Rel-18 UL Tx switching, it is necessary to configure a larger number of UL carriers than the number of CCs of UL CA supported in UL CA. However, in the related art, it is not assumed that the number of UL CCs equal to or greater than the number of supported CCs is configured.

Another existing technology is supplemental uplink (SUL). In the framework of the SUL, association with a normal uplink (NUL) and dynamic switching are supported, but it is not assumed that the framework of the SUL is extended.

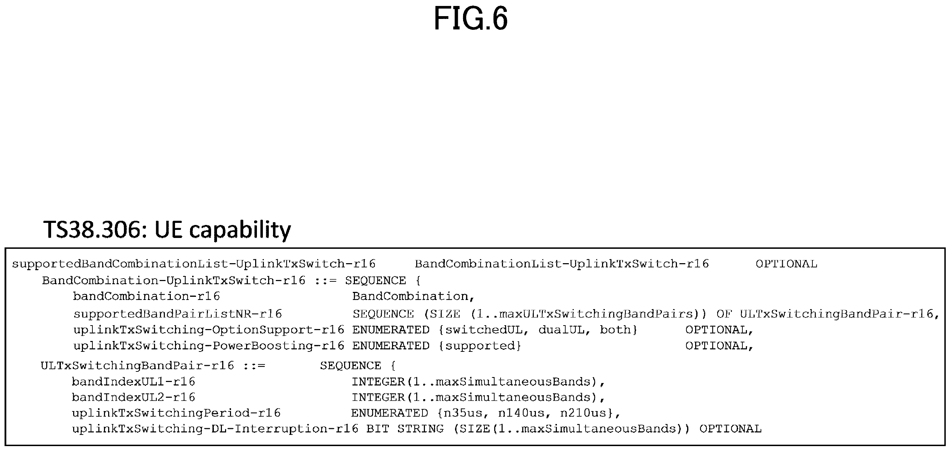

As shown in Fig.6, UE capability reported from the terminal 20 to the base station 10 corresponding to Rel-16 Tx switching is defined. However, UE capability corresponding to Rel-18 UL Tx switching is not defined.

Regarding the Rel-18 UL Tx switching as described above, since there is no conventional technology for the contents of the capability report from the terminal 20 to the base station 10 and the configuration/instruction from the base station 10 to the terminal 20, there is a possibility that the conventional technology cannot appropriately perform "UL Tx switching schemes across up to 3 or 4 bands with restriction of up to 2 Tx simultaneous transmission".

Therefore, in the present embodiment, a capability report and a configuration/instruction that enable "UL Tx switching schemes across up to 3 or 4 bands with restriction of up to 2 Tx simultaneous transmission" to be appropriately performed will be described.

Note that, although "UL Tx switching schemes across up to 3 or 4 bands with restriction of up to 2 Tx simultaneous transmission" is assumed in the present embodiment, this is merely an example. The maximum number of bands that is a range for performing transmission switching may be greater than four. The number of antenna ports used for transmission may be greater than two. That is, there may be a case where simultaneous transmission occurs in three or more antenna ports.

In the following description, unless otherwise specified, one band has one carrier. Therefore, in the present specification and claims, a "band" may be replaced with a "carrier", and a "carrier" may be replaced with a "band". However, one band having one carrier is an example, and one band may have a plurality of carriers. When a plurality of carriers are included in one band, the number or relationship of the carriers may be limited, for example, an limitation such as "up to two carriers that are consecutive in frequency" may be set. A plurality of carriers in one band may be treated similarly to one UL band (carrier) in the following description.

Also, in the following description, "carrier," "component carrier (CC)," and "cell" may be used synonymously.

In the case where the maximum number of bands over which transmission switching is performed is 4, the maximum number of CCs over which transmission switching is performed is as follows.

When there is one CC per one band, the number of CCs is 4. If there are 2 CCs (intra-band) per one band, the number of CCs is 8. When there are 2 CCs per one band but some bands have only one CC, the number of CCs ranges from 5 to 7. Additionally, if there are 3 or more CCs (intra-band) per one band, the number of CCs becomes 12 or more.

### (Outline of Embodiment)

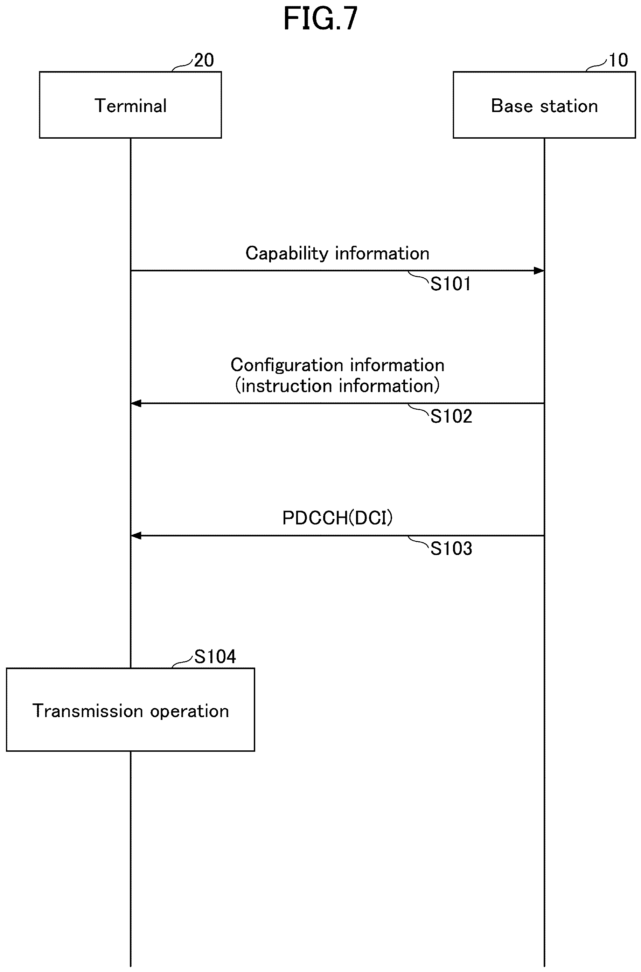

The present embodiment includes first to third embodiments. A basic operation example common to the first to third embodiments will be described with reference to FIG. 7.

In S101, the terminal 20 transmits capability information (capability) to the base station 10. Examples of the capability information will be described in each embodiment. In S102, the base station 10 transmits configuration information (or instruction information) to the terminal 20. Examples of the configuration information/instruction information will also be described in each embodiment.

The base station 10 determines the configuration/instruction contents for the terminal 20 within the range of the capability of the terminal 20 indicated by the capability information of the terminal 20 received in S101, creates configuration information/instruction information, and transmits the information in S102. However, such assumption is merely an example.

The terminal 20 that have received the configuration information/instruction information in S102 operates in accordance with the information. In S103, when the terminal 20 receives a DCI from the base station 10, for example, the terminal 20 switches a band to which a port is connected based on the DCI in accordance with the configuration information, and performs transmission using the switched port in S104.

The transmission of the configuration information/instruction information in S102 may be performed by any one of RRC signaling, a MAC-CE, and a DCI, or a combination of a plurality of any of these. For example, in a first embodiment described later, a configuration/instruction method is possible in which the base station 10 configures eight bands by RRC for the terminal 20 that has reported four as the maximum number of bands that can be configured, and instructs four bands from among the eight bands by a MAC-CE.

Hereinafter, first to third embodiments will be described. Any two of the first to third embodiments can be combined and implemented. Further, all of the first to third embodiments can be combined and implemented.

### (First Embodiment)

In the first embodiment, the terminal 20 reports the maximum number of bands that can be configured in the terminal 20 (supported by the terminal 20) to the base station 10 as capability information (Capability). It is assumed that the terminal 20 performs UL Tx switching with the maximum number of bands reported or a smaller number of bands. The maximum number of bands is the maximum number of bands supported by the terminal 20 for UL Tx switching.

For example, the base station 10 that has received the capability information may configure or indicate information regarding a plurality of bands of the maximum number of bands reported from the terminal 20 or a smaller number of bands as the information of the band combination for UL Tx switching to the terminal 20 by any one or a combination of a plurality of RRC signaling, a MAC-CE, and a DCI.

The "information related to a band" that is configured or instructed by the base station 10 to the terminal 20 may be the band itself (the band number or the like), may be a CC in the band, or may be a cell in the band.

Thereafter, for example, the terminal 20 performs UL Tx switching according to UL scheduling received from the base station 10 within a range of a plurality of bands configured or instructed to the terminal 20 by the base station 10.

When the terminal 20 does not report the capability information to the base station 10, the base station 10 may assume a value defined in the technical specification as the maximum number of bands supported by the terminal 20.

The "number of bands" in the first embodiment may be replaced with the "number of carriers" or the "number of bands + number of carriers".

Hereinafter, options 1-1 to 1-3 will be described as more detailed examples in the first embodiment.

### <Option 1-1>

The terminal 20 reports the maximum number of bands supported for UL Tx switching to the base station 10. In the terminal 20 that has reported the maximum number of bands, any combination of the reported number of bands may be configured (or indicated) as the bands of the UL Tx switching target. That is, the base station 10 can configure (or indicate) any combination of the bands of the number reported from the terminal 20 as the band of the UL Tx switching target for the terminal 20.

For example, it is assumed that there are ten bands, band 1, band 2, band 3,..., band 10, as bands available in the system (the terminal 20 and the base station 10).

Here, when the terminal 20 reports "two" to the base station 10 as the maximum number of bands, the base station 10 can configure (or indicate) any combination of two bands (example: band 1 and band 2, band 1 and band 4) among the 10 bands as the bands for UL Tx switching for the terminal 20. The terminal 20 performs UL Tx switching between the bands of the configured combination based on the scheduling from the base station 10.

The phrase "the base station 10 configures a band for the terminal 20" may refer to configuring a cell (cell including UL) belonging to the band. For example, configuring a combination of band 1 and band 4 as bands for UL Tx switching for the terminal 20 by the base station 10 may involve configuring a combination of cell A (a cell in band 1) and cell B (a cell in band 4).

When the terminal 20 reports to the base station 10 that the maximum number of supported bands for UL Tx switching is 2, the terminal 20 may be configured by the base station 10 for any combination of two bands within FR1 or FR2 as the bands for Tx switching. In other words, upon receiving the report from the terminal 20 that the maximum number of bands is 2, the base station 10 can configure the terminal 20 for any combination of two bands within FR1 or FR2 as the bands for Tx switching.

### <Option 1-2>

Next, option 1-2 will be described. The terminal 20 reports the maximum number of bands supported for UL Tx switching to the base station 10. The terminal 20 reports a band combination of UL CA to the base station 10 as capability information of UL CA. The report of the maximum number of bands and the report of the band combination of UL CA may be performed simultaneously or at different timings.

The terminal 20 that has reported the maximum number of bands and the band combination of UL CA is assumed to perform UL Tx switching between bands in the band combination of UL CA within the range of the maximum number of bands. Hereinafter, BC may be used as an abbreviation of band combination.

For example, the base station 10 that has received the two reports configures, for the terminal 20, a combination of bands in the band combination of UL CA within the range of the maximum number of bands as bands of UL Tx switching targets.

For example, it is assumed that there are ten bands, band 1, band 2, band 3,.., band 10, as bands available in the system (the terminal 20 and the base station 20). In addition, it is assumed that the terminal 20 reports BC #1 = {1,3,5,7,9} and BC #2 = {2,4,6,8,10} to the base station 10 as the supported band combinations of UL CA.

At this time, when the terminal 20 reports 2 as the maximum number of bands supported in UL Tx switching to the base station 10, the terminal 20 assumes to perform UL Tx switching using two bands in BC #1 (or BC #2).

For example, it is assumed that the base station 10 configures the terminal 20 with two bands for performing UL Tx switching and the base station 10 schedules the terminal 20 to perform UL Tx switching in the configured two bands.

As described above, in Option 1-2, the band as a target of UL Tx switching is limited to a band in the band combination of UL CA, as compared with Option 1-1.

### <Option 1-3>

Next, Option 1-3 will be described. The terminal 20 reports the maximum number of bands supported for UL Tx switching to the base station 10. The terminal 20 reports the band combination of UL CA to the base station 10 as capability information of UL CA. The report of the maximum number of bands and the report of the band combination of UL CA may be performed simultaneously or at different timings.

Option 1-3 describes the case where the reported maximum number of bands is greater than the reported number of bands in the band combination. That is, a case where "the maximum number of bands> the number of bands in BC" will be described. The following Alt1 and Alt2 are described.

### <Option 1-3: Alt1>

It is assumed that the terminal 20 performs UL Tx switching between all bands in the BC or between a part of a plurality of bands in the BC.

For example, it is assumed that all bands in the BC or a part of the plurality of bands in the BC are configured as bands in which UL Tx switching can be performed from the base station 10 to the terminal 20, and the terminal 20 is scheduled to perform UL Tx switching between the plurality of configured bands from the base station 10.

As an example, it is assumed that the terminal 20 reports 4 as the maximum number of bands to the base station 10 and reports BC in which the number of bands is 2. At this time, for example, it is assumed that the base station 10 configures two bands of the BC as bands of targets of UL Tx switching for the terminal 20, and the terminal 20 performs UL Tx switching in the two bands.

### <Option 1-3 : Alt2>

The terminal 20 is assumed to perform UL Tx switching between a plurality of bands in a plurality of reported BCs, the plurality of bands being equal to or less than the maximum number of bands.

For example, the base station 10 configures a plurality of bands in a plurality of BCs, the number of which is equal to or less than the maximum number of bands, as bands in which UL Tx switching can be performed for the terminal 20, and the terminal 20 assumes that the base station 10 performs scheduling for the terminal 20 to perform UL Tx switching between the configured plurality of bands.

As an example, it is assumed that the terminal 20 reports 4 as the maximum number of bands to the base station 10, and reports BC #1 = {1, 3} and BC #2 = {2, 4} to the base station 10. At this time, for example, the base station 10 configures {1,2,3,4} as target bands of UL Tx switching for the terminal 20, and the terminal 20 assumes that the terminal 20 performs UL Tx switching in the four bands.

In the first embodiment, the terminal 20 reports the maximum number of bands to the base station 10, and thus the base station 10 can configures a band corresponding to the capability of the terminal 20 in the terminal 20. As a result, the terminal 20 can appropriately perform UL Tx switching.

### (Second Embodiment)

In the second embodiment, the terminal 20 reports information related to one or more band combinations (BCs) for UL Tx switching supported for Rel-18 UL Tx switching to the base station 10 separately from the BC for UL CA. The BCs for UL Tx switching to be reported may include a band that does not support UL CA.

For example, when the terminal 20 reports BC1, BC2, and BC3 as BCs for UL CA, the terminal 20 may report BC4 and BC5 as BCs for UL Tx switching. For example, when the terminal 20 reports BC1, BC2, and BC3 as BCs for UL CA, the terminal 20 may report BC1, BC2, and BC5 as BCs for UL Tx switching.

The base station 10 that has received the report of the supported BCs for UL Tx switching from the terminal 20 may configure a combination of arbitrary multiple bands in the BCs for UL Tx switching as a plurality of bands for UL Tx switching for the terminal 20. The terminal 20 assumes that the base station 10 performs scheduling for performing UL Tx switching between the plurality of bands.

As a more specific example, the following option 2-1 will be described.

### <Option 2-1>

In option 2-1, BCs for UL Tx switching is reported from the terminal 20 to the base station 10, and the maximum number of bands described in the first embodiment is reported. The terminal 20 assumes to perform UL Tx switching in a plurality of bands of which the number is equal to or less than the maximum number of bands in the BCs for UL Tx switching.

As an example, it is assumed that the terminal 20 reports 4 as the maximum number of bands to the base station 10 and reports bands A, B, C, and D as a BC for UL Tx switching. In this case, it is assumed that the terminal 20 performs UL Tx switching in the bands A, B, C, and D, for example.

For example, the base station 10 that has received the report configures the bands A, B, C, and D as the BC for UL Tx switching in the terminal 20. The terminal 20 assumes to be scheduled to perform UL Tx switching in the bands A, B, C, and D.

As another example, it is assumed that the terminal 20 reports 4 as the maximum number of bands to the base station 10, and reports bands A, B, C, D, E, F, G, and H as the BC for UL Tx switching. In this case, for the terminal 20, any combination of up to four bands among bands A, B, C, D, E, F, G, and H may be configured (specified) as the BC subject to UL Tx switching.

For example, upon receiving the above report, the base station 10 selects bands A, B, C, and D from among bands A, B, C, D, E, F, G, and H as up to four bands, and configures the terminal 20 with bands A, B, C, and D as the BC subject to UL Tx switching. The terminal 20 assumes that base station 10 performs scheduling for UL Tx switching among bands A, B, C, and D.

In the second embodiment, the terminal 20 reports the BC for UL Tx switching to the base station 10 as capability information, and thus the base station 10 can configure a band corresponding to the capability of the terminal 20 in the terminal 20. As a result, the terminal 20 can appropriately perform UL Tx switching.

### (Third Embodiment)

The third embodiment is based on the premise that the BC for UL Tx switching in the second embodiment is reported. However, the present embodiment is not limited to this assumption, and the third embodiment may be performed independently of the second embodiment.

In the third embodiment, the terminal 20 reports, to the base station 10, capability information regarding the number of CCs supported in each band of the BC for UL Tx switching described in the second embodiment. The capability information may be reported for each band or for each BC.

The capability information related to the number of CCs may be the number of CCs (the number of cells) itself. Note that the band (the band in which the number of CCs is reported) in the third embodiment may be a band that is not the band within the BC reported in the second embodiment. When the terminal 20 does not report the capability information on the number of CCs to the base station 10, the base station 10 may use a defined value as the number of CCs.

The base station 10 that has received the report can configure CCs (cells) within the range of the number of CCs supported by the terminal 20, for example, for each band in the BC that is a target of UL Tx switching in the terminal 20. For example, suppose that in the terminal 20, the bands within the BC subject to UL Tx switching are band 1 and band 2, and the number of CCs supported in band 1 is 1, and the number of CCs supported in band 2 is 2. In this case, the base station 10 configures cell A in band 1 and cells B and C in band 2 as the cells for performing UL Tx switching to the terminal 20. The terminal 20 assumes that scheduling for UL Tx switching is performed among cells A, B, and C.

Also, the upper limit of the number of CCs or the total bandwidth that can be supported in each band in UL Tx switching according to the present embodiment may be stipulated in the technical specification. For example, for each band, "up to two consecutive CCs", "consecutive CCs in a 100 MHz band", or the like may be defined as the number of CCs that can be supported by the terminal 20. In this case, the base station 10 configures the terminal 20 with the number of cells within this specified range as the cells within the band subject to UL Tx switching.

As a more specific example, the following option 3-1 will be described.

### <Option 3-1>

In option 3-1, the number of CCs in one band is reported from the terminal 20 to the base station 10, and the maximum number of bands described in the first embodiment is reported. At this time, the terminal 20 can assume that the maximum number of UL CCs that can be configured from the base station 10 for UL Tx switching is "the number of CCs in one band × the maximum number of bands". The terminal 20 can, for example, secure processing resources based on this assumption.

As an example, when the terminal 20 reports 4 as the maximum number of bands that can be configured to the base station 10 and reports 2 as the maximum number of CCs in one band, the terminal 20 assumes that the maximum number of UL CCs that can be configured in the terminal 20 is 8.

In the third embodiment, the terminal 20 reports the maximum number of CCs in one band to the base station 10 as the capability information, and thus the base station 10 can configures CCs suitable for the capability of the terminal 20 to the terminal 20. As a result, the terminal 20 can appropriately perform UL Tx switching.

### (Apparatus Configuration)

Next, functional configuration examples of the base station 10 and the terminal 20 that execute the processes and operations described above will be described.

### <Base station 10>

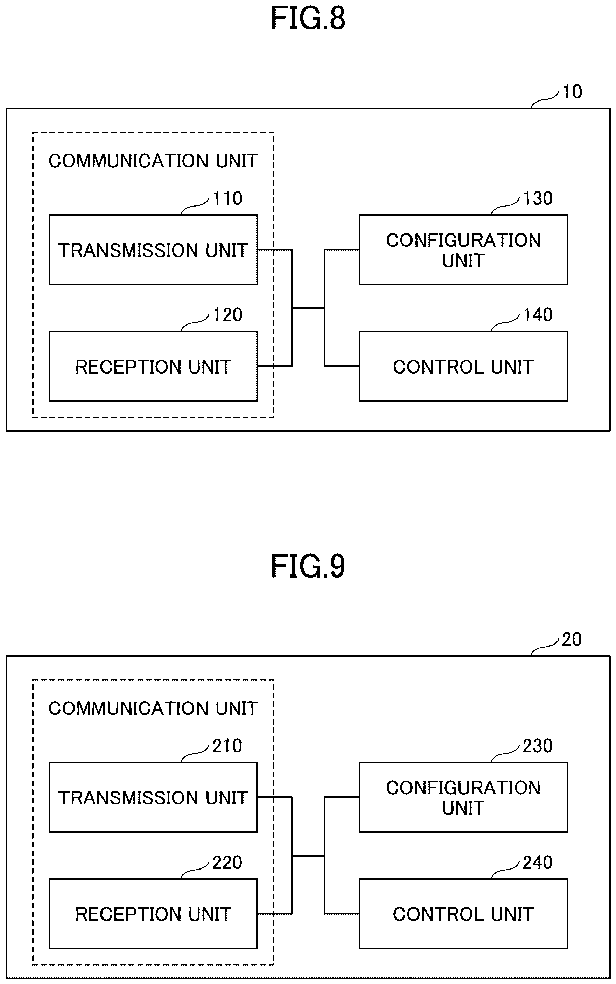

FIG. 8 is a diagram illustrating an example of a functional configuration of the base station 10. As illustrated in FIG. 8, the base station 10 includes a transmission unit 110, a reception unit 120, a configuration unit 130, and a control unit 140. The functional configuration shown in FIG. 20 is merely an example. The functional sections and the names of the functional units may be any name as long as the operations according to the embodiment of the present invention can be executed. The transmission unit 110 and the reception unit 120 may be collectively referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, DL/UL control signal, DCI by PDCCH, data by PDSCH, and the like to the terminal 20.

The configuration unit 130 stores configuration information set in advance and various kinds of configuration information to be transmitted to the terminal 20 in a storage device included in the configuration unit 130, and reads the configuration information from the storage device as necessary.

The control unit 140 performs scheduling of DL reception or UL transmission of the terminal 20 via the transmission unit 110. The control unit 140 also includes a function of performing LBT. The functional unit related to signal transmission in the control unit 140 may be included in the transmission unit 110, and the functional unit related to signal reception in the control unit 140 may be included in the reception unit 120. The transmission unit 110 may be referred to as a transmitter, and the reception unit 120 may be referred to as a receiver.

### <Terminal 20>

FIG. 9 is a diagram illustrating an example of a functional configuration of the terminal 20. As illustrated in FIG. 9, the terminal 20 includes a transmission unit 210, a reception unit 220, a configuration unit 230, and a control unit 240. The functional configuration shown in FIG. 9 is merely an example. The functional sections and the names of the functional units may be any as long as the operations according to the embodiment of the present invention can be executed. The transmission unit 210 and the reception unit 220 may be collectively referred to as a communication unit.

The transmission unit 210 creates a transmission signal from the transmission data and transmits the transmission signal by radio. The reception unit 220 receives various signals by radio and acquires a signal of a higher layer from the received signal of the physical layer. Also, the reception unit 220 has a function of receiving NR-PSS, NR-SSS, NR-PBCH, DL/UL/SL control signal, DCI by PDCCH, data by PDSCH and so on, transmitted from the base station 10. For example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to other terminals 20 as D2D communication, and the reception unit 220 may receive the PSCCH, the PSSCH, the PSDCH, the PSBCH, or the like from other terminals 20. In addition, the transmission unit 210 includes an antenna port described in the present embodiment.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information set in advance.

The control unit 240 controls the terminal 20. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver.

According to the present embodiment, at least the following terminal, base station, and communication method are provided.

### <Supplementary Notes>

### [Item 1]

A terminal including:
a transmission unit configured to report, to a base station, a maximum number of bands to be supported for a transmission switching scheme in which transmission switching can be performed across three or more bands; and
a reception unit configured to receive, from the base station, configuration information related to a band for use in the transmission switching scheme.

### [Item 2]

The terminal as described in item 1,
wherein the transmission unit reports, to the base station, a band combination to be supported for uplink carrier aggregation, and assumes to perform transmission switching using a plurality of bands, the number of which is equal to or less than the maximum number of bands, that are included in the band combination.

### [Item 3]

The terminal as described in item 1,
wherein the transmission unit reports, to the base station, a band combination usable for the transmission switching scheme separately from the band combination for the uplink carrier aggregation.

### [Item 4]

The terminal as described in item 1,
wherein the transmission unit reports, to the base station, a maximum number of carriers to be supported in each band usable for the transmission switching scheme.

### [Item 5]

A base station including:
a reception unit configured to receive, from a terminal, a maximum number of bands to be supported for a transmission switching scheme in which transmission switching can be performed across three or more bands; and
a transmission unit configured to transmit, to the terminal, configuration information, related to a band for use in the transmission switching scheme.

### [Item 6]

A communication method executed by a terminal, the communication method including:
reporting, to a base station, a maximum number of bands to be supported for a transmission switching scheme in which transmission switching can be performed across three or more bands; and
receiving, from the base station, configuration information related to a band for use in the transmission switching scheme.

According to any of the first to sixth items, a technology is provided that enables appropriate switching of bands used for uplink transmission in a radio communication system. According to item 2, since the band in the band combination supported for the uplink carrier aggregation is used, the transmission switching can be appropriately performed. According to item 3, the band combination usable in the transmission switching scheme is reported separately from the band combination for uplink carrier aggregation, and thus the base station 10 can perform flexible control. According to item 4, the maximum number of carriers per band is reported, and therefore the base station 10 can configure carriers suitable for the terminal capability.

### (Hardware Configuration)

The block diagrams (FIGs. 20 and 21) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

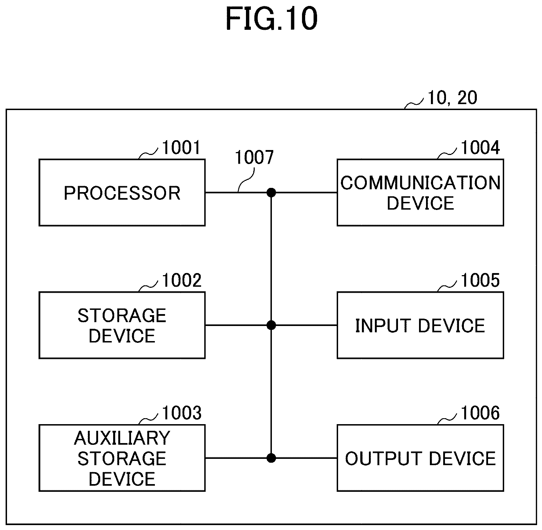

For example, the base station 10, the terminal 20 and the like in one embodiment of this disclosure may function as a computer for performing the processing of a radio communication method of this disclosure. FIG. 10 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 or the communication device 1004, and thus, executes various processing. A program for allowing a computer to execute at least a part of the operation described in the embodiment described above is used as the program. The control unit 140 of the base station 10 shown in FIG. 8 may be attained by a control program that is stored in the storage device 1002 and is operated by the processor 1001. Also, for example, the control unit 240 of the terminal 20 shown in FIG. 9 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

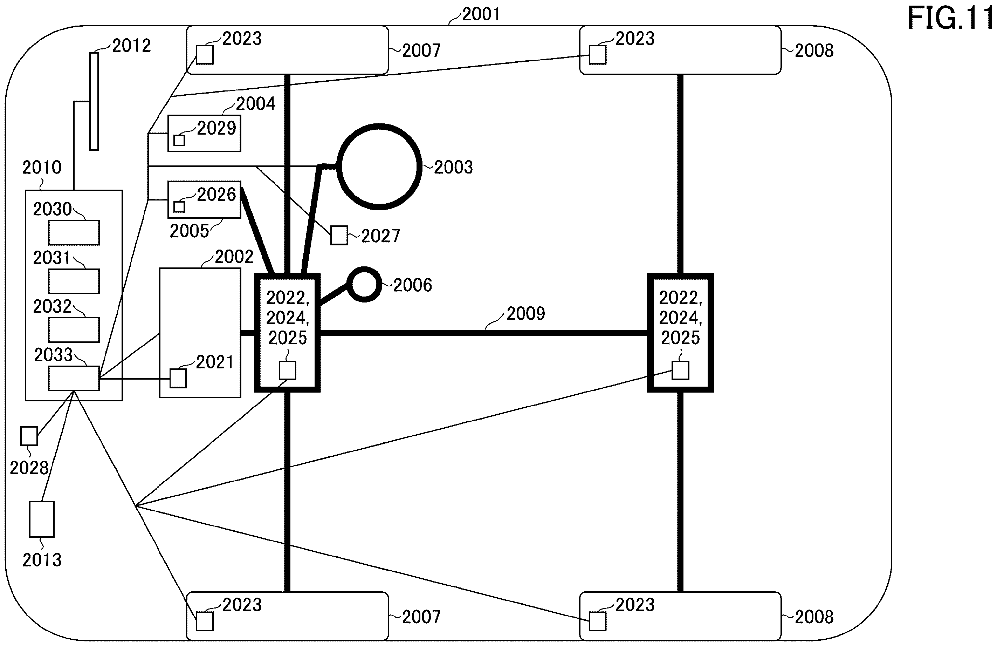

The terminal 20 or the base station 10 may be provided in a vehicle. FIG. 11 shows a configuration example of a vehicle 2001 according to the present embodiment. As shown in FIG. 11, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The terminal 20 or the base station 10 in each aspect/embodiment described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, or the like) that receives an input from the outside, and may include an output device (for example, a display, a speaker, an LED lamp, a touch panel, or the like) that performs an output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input. For example, PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), a 6th generation mobile communication system (6G), an xth generation mobile communication system (xG) (x is an integer or a decimal for example), future radio access (FRA), new radio (NR), New radio access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, created, or defined on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a subroutine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macrocell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmission device, a reception device, a communication device, or the like. At least one of the base station and the mobile station may be a device mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may differ for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure. Description of Symbols

- 10: base station
- 110: transmission unit
- 120: reception unit
- 130: configuration unit
- 140: control unit
- 20: terminal
- 210: transmission unit
- 220: reception unit
- 230: configuration unit
- 240: control unit
- 1001: processor
- 1002: storage device
- 1003: auxiliary storage device
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheels
- 2008: rear wheels
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port (IO port)

## Claims

1. A terminal comprising:
a transmission unit configured to report, to a base station, a maximum number of bands to be supported for a transmission switching scheme in which transmission switching can be performed across three or more bands; and
a reception unit configured to receive, from the base station, configuration information related to a band for use in the transmission switching scheme.

2. The terminal as claimed in claim 1,
wherein the transmission unit reports, to the base station, a band combination to be supported for uplink carrier aggregation, and assumes to perform transmission switching using a plurality of bands, the number of which is equal to or less than the maximum number of bands, that are included in the band combination.

3. The terminal as claimed in claim 1,
wherein the transmission unit reports, to the base station, a band combination usable for the transmission switching scheme separately from the band combination for the uplink carrier aggregation.

4. The terminal as claimed in claim 1,
wherein the transmission unit reports, to the base station, a maximum number of carriers to be supported in each band usable for the transmission switching scheme.

5. A base station comprising:
a reception unit configured to receive, from a terminal, a maximum number of bands to be supported for a transmission switching scheme in which transmission switching can be performed across three or more bands; and
a transmission unit configured to transmit, to the terminal, configuration information related to a band for use in the transmission switching scheme.

6. A communication method executed by a terminal, the communication method comprising:
reporting, to a base station, a maximum number of bands to be supported for a transmission switching scheme in which transmission switching can be performed across three or more bands; and
receiving, from the base station, configuration information related to a band for use in the transmission switching scheme.
